# EUROPÄISCHE PATENTANMELDUNG

(11) **EP 1 155 988 A2**
(43) Veröffentlichungstag der Anmeldung: **21.11.2001**
(21) Anmeldenummer: 01110174.8
(22) Anmeldetag: 07.05.2001
(51) Int. Cl.: B65H 23/06

(54) **Torsionsfähige Papierbahnanordnung mit einem Versteifungselement**

(30) Priorität: 17.05.2000 US 204827 P
(71) Anmelder: Heidelberger Druckmaschinen Aktiengesellschaft, 69115 Heidelberg (DE)
(72) Erfinder: Luther, Richard Guy, Hamlin, NY 14464 (US)
(74) Vertreter: Franzen, Peter

(57) **Zusammenfassung**

Eine Papierbahnanordnung (2) für einen Scanner/Drucker mit zwei aufeinanderpassenden Teilen (10; 20), die schwenkbar miteinander verbunden sind. so dass sie geöffnet werden können, falls ein Papierstau entsteht. Eines der aufeinanderpassenden Teile (10; 20) ist eine Wendeanordnung (10), die torsionsschwach um eine Achse (16) in Richtung der Papierbahn und mittig zwischen den langgestreckten Enden (13; 15) der Wendeanordnung (10) ist. Dies ist vorgesehen, damit die Wendeanordnung (10) mit der aufeinanderpassenden Anordnung (20) abschließt, wenn sie geschlossen werden. Ein Versteifungselement (30) ist an der Wendeanordnung (10) befestigt, so dass, wenn das Versteifungselement (30) in Kontakt gebracht ist, die Wendeanordnung (10) torsionsfest ist. Wenn die Wendeanordnung (10) mit der aufeinanderpassenden Anordnung (20) abschließt, wird das Versteifungselement (30) befestigt.

## Beschreibung

Die vorliegende Erfindung betrifft eine torsionsfähige Papierbahnanordnung und ist insbesondere für die Verwendung in Scannern oder Druckern geeignet.

Bei Papierbahnanordnungen, die aus aufeinanderpassenden Teilen bestehen, die um ein Gelenk geöffnet und an zwei Punkten geschlossen werden, ist es aufgrund der Toleranzen im Herstellungsprozess oft schwierig, die aufeinanderpassenden Teile richtig zu schließen. Üblicherweise verfügen die Anordnungen über einen gewissen Spielraum bei der Rotation um eine Achse parallel zur Papierbahn, so dass sie ganz geschlossen werden können. Diese Anordnungen bezeichnet man als torsionsschwach. In einigen Fällen ist eine torsionsschwache Anordnung unter funktionellen Gesichtspunkten sowie vom Standpunkt des Kunden betrachtet nicht wünschenswert.

Aufgabe der vorliegenden Erfindung ist es, eine Papierbahnanordnung zu schaffen, die trotz der Toleranzen im Herstellungsprozess ganz geschlossen werden kann und dennoch während des Betriebs nicht torsionsschwach ist.

Die Aufgabe wird erfindungsgemäß gelöst durch eine Papierbahnanordnung mit einem torsionsschwachen ersten Teil mit einem Eingangsende und einem entgegengesetzten Ausgangsende, wobei das torsionsschwache erste Teil torsionsschwach um eine torsionsschwache Achse des ersten Teils ist. Diese Achse erstreckt sich in Richtung der Papierbahn und ist zwischen den langgestreckten Enden des ersten Teils mittig angeordnet ist. Die Papierbahnanordnung umfasst des weiteren ein daraufpassendes zweites Teil mit einem Befestigungspunkt für das zweite Teil, wobei das torsionsschwache Eingangsende des ersten Teils schwenkbar mit dem daraufpassenden zweiten Teil an dem Befestigungspunkt für das erste Teil verbunden ist. Des weiteren ist ein Versteifungselement auf dem torsionsschwachen ersten Teil befestigt, so dass, wenn das Versteifungselement befestigt worden ist, das torsionsschwache erste Teil torsionsfest wird.

Die vorliegende Erfindung wird nachfolgend mit Bezug auf die Zeichnungen anhand bevorzugter Ausführungsformen beschrieben.

In den Zeichnungen zeigen:
- Fig. 1: eine isometrischen Ansicht eines erfindungsgemäßen torsionsschwachen ersten Teils,
- Fig. 2: eine isometrische Ansicht einer erfindungsgemäßen geschlossenen Papierbahnanordnung,
- Fig. 3: eine Seitenansicht einer erfindungsgemäßen geöffneten Papierbahnanordnung.

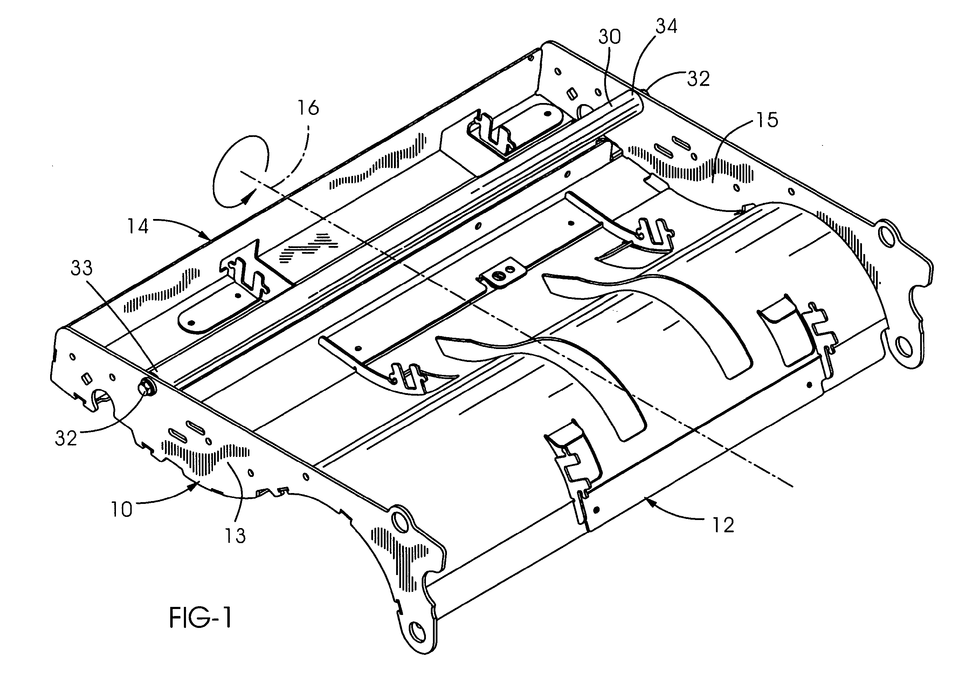

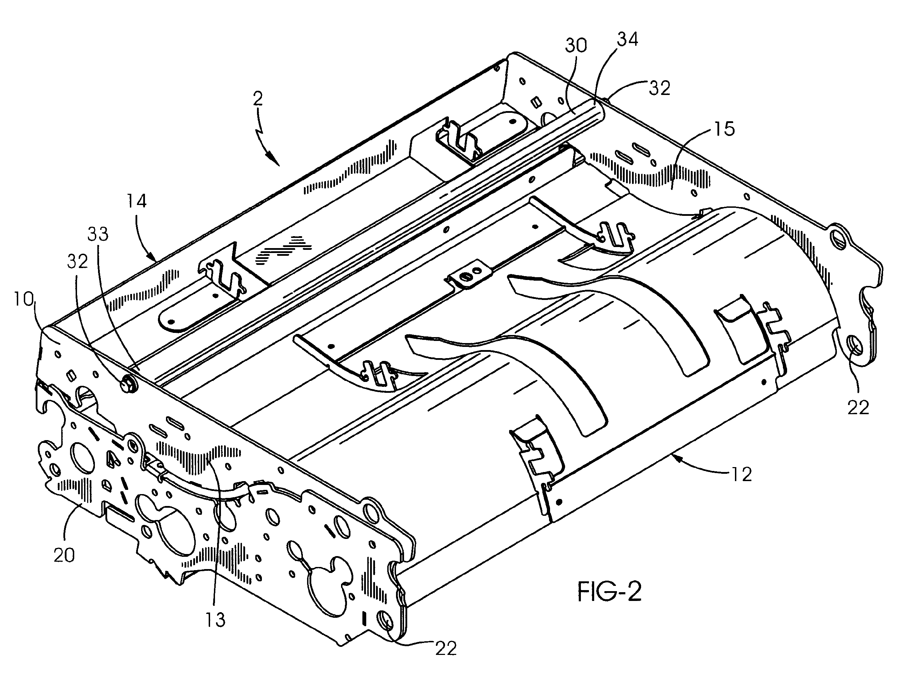

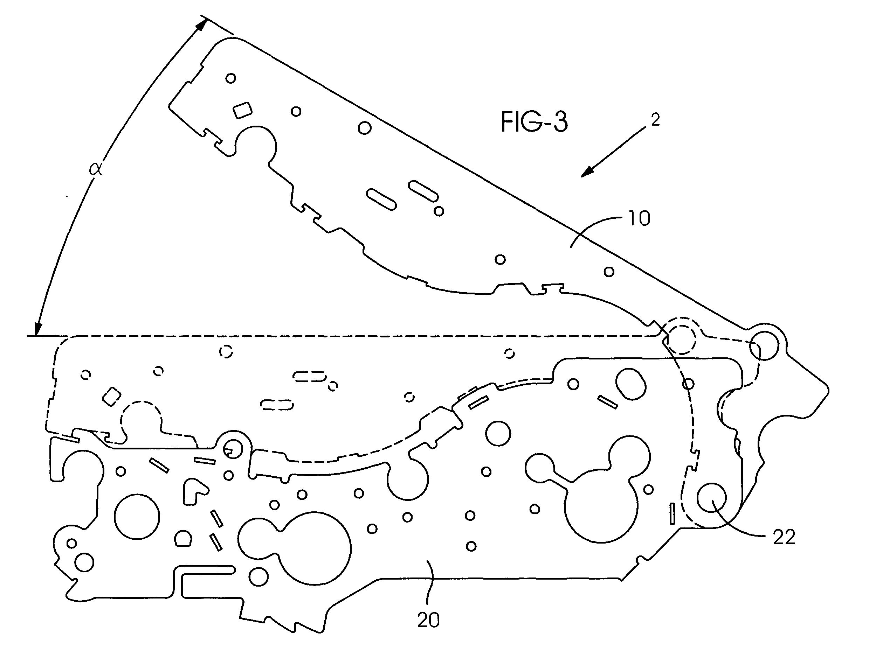

Verschiedene Aspekte der Erfindung sind in den Figuren 1 bis 3, die nicht im Originalmaßstab gezeichnet sind, dargestellt. In Fig. 2 ist eine erfindungsgemäße Papierbahnanordnung 2 dargestellt. Die Papierbahnanordnung 2 umfasst ein torsionsschwaches erstes Teil 10, ein daraufpassendes zweites Teil 20 und ein Versteifungselement 30. In Fig. 1 und 2 weist das torsionsschwache erste Teil 10 ein langgestrecktes erstes Ende 13 und ein entgegengesetztes langgestrecktes Ende 15, ein Eingangsende 12 und ein entgegengesetztes Ausgangsende 14 auf, wobei die Papierbahn von dem Eingangsende 12 zu dem Ausgangsende 14 verläuft. Das torsionsschwache erste Teil 10 ist um die torsionsschwache Achse 16 des ersten Teils torsionsschwach, wobei die torsionsschwache Achse 16 eine Achse in Richtung der Papierbahn ist und sich mittig zwischen dem ersten Ende 13 und dem entgegengesetzten Ende 15 des ersten Teils befindet. Alle nachfolgenden Bezüge auf ein torsionsschwaches erstes Teil 10 beziehen sich auf ein torsionsschwaches erstes Teil 10, das um eine torsionsschwache Achse 16, welche in derselben Weise angeordnet ist, torsionsschwach ist.

Das daraufpassende zweite Teil 20 weist einen Befestigungspunkt 22 für das erste Teil auf. Das Eingangsende 12 des torsionsschwachen ersten Teils ist schwenkbar mit dem passenden zweiten Teil 20 an dem Befestigungspunkt 22 für das erste Teil verbunden. Das Versteifungselement 30 ist derart auf dem torsionsschwachen ersten Teil 10 befestigt, dass das torsionsschwache erste Teil 10 um die torsionsschwache Achse 16 torsionsfest wird, wenn es mit dem Versteifungselement 30 verbunden wird. In weiteren Ausführungsformen der Erfindung kann das Versteifungselement 30 ein fester Bestandteil des torsionsschwachen ersten Teils 10 sein, indem es z.B. einseitig fest mit dem ersten Teil verbunden ist.

In einer bevorzugten Ausführungsform der Erfindung umfasst das Versteifungselement 30 eine Leiste mit einem ersten Ende 33 und einem zweiten Ende 34, die senkrecht zu der torsionsschwachen Achse 16 des ersten Teils befestigt sind. In einer weiteren bevorzugten Ausführungsform der Erfindung ist die Leiste befestigt, indem das erste Ende 33 des Versteifungselements an das erste Ende 13 des torsionsschwachen ersten Teils angeschraubt wird, und das zweite Ende 34 des Versteifungselements an das zweite Ende 15 des torsionsschwachen ersten Teils angeschraubt wird. Das Versteifungselement 30 wird befestigt, indem die Schrauben 32 festgezogen werden.

Bei dem torsionsschwachen ersten Teil kann es sich um eine torsionsschwache Wendevorrichtung eines Scanner oder eines Druckers handeln.

Ein weiterer Aspekt der Erfindung ist ein Verfahren zum Zusammensetzen einer Papierbahnanordnung 2. Dieses Verfahren umfasst die Schritte des schwenkbaren Befestigens eines torsionsschwachen ersten Teils 10 mit einem Eingangsende 12 und einem entgegengesetzten Ausgangsende 14 an einem daraufpassenden zweiten Teil 20 mit einem Befestigungspunkt 22 für das erste Teil. Das Eingangsende 12 ist drehbar an dem Befestigungspunkt 22 für das erste Teil befestigt. Ein weiterer Schritt ist das Schließen des torsionsschwachen ersten Teils 10 auf das dazupassende zweite Teil 20, so dass das torsionsschwache erste Teil 10 mit dem zugehörigen zweiten Teil 20 zusammenpasst. Der letzte Schritt ist das Arretieren des torsionsschwachen ersten Teils 10 in der entsprechenden Torsionposition anhand eines Versteifungselements 30, das auf dem torsionsschwachen ersten Teil 10 befestigt ist, so dass, wenn das Versteifungselement 30 befestigt worden ist, das torsionsschwache erste Teil 10 um die torsionsschwache Achse 16 torsionsfest ist.

### Bezugszeichenliste

- 2: Papierbahnanordnung
- 10: torsionsschwaches erstes Teil
- 12: Eingangsende
- 13: langgestrecktes erstes Ende des torsionsschwachen ersten Teils
- 14: Ausgangsende
- 15: langgestrecktes entgegengesetztes Ende des ersten Teils
- 16: torsionsschwache Achse
- 20: daraufpassendes zweites Teil
- 22: Befestigungspunkt für das torsionsschwache erste Teil
- 30: Versteifungselement
- 32: Schrauben
- 33: Ende eins des Versteifungselements
- 34: Ende zwei des Versteifungselements

## Patentansprüche

1. Papierbahnanordnung mit
einem torsionsschwachen ersten Teil (10), das ein Eingangsende (12) und ein entgegengesetztes Ausgangsende (14) umfasst, wobei das torsionsschwache erste Teil (10) um die torsionsschwache Achse (16) des ersten Teils (10) torsionsschwach ist, wobei die torsionsschwache Achse (16) mittig in Papierrichtung des ersten Teils (10) angeordnet ist,
einem daraufpassenden zweiten Teil (20) mit einem Befestigungsstift (22) für das erste Teil (10), wobei das Eingangsende (12) des torsionsschwachen ersten Teils (10) an dem daraufpassenden zweiten Teil an dem Befestigungsstift für das erste Teil (10) schwenkbar befestigt ist, und
einem Versteifungselement (30), das auf dem torsionsschwachen ersten Teil (10) befestigt ist, so dass, wenn das Versteifungselement (30) befestigt ist, das torsionsschwache erste Teil (10) um die torsionsschwache Achse (16) torsionsfest ist.

2. Papierbahnanordnung gemäß Anspruch 1,
**dadurch gekennzeichnet,**
**dass** das Versteifungselement (30) teilweise fest mit dem torsionsschwachen ersten Teil (10) verbunden ist.

3. Papierbahnanordnung gemäß Anspruch 1,
**dadurch gekennzeichnet,**
**dass** das Versteifungselement (30) kein fester Bestandteil des torsionsschwachen ersten Teils (10) ist.

4. Papierbahnanordnung gemäß einem der Ansprüche 1, 2 oder 3,
**dadurch gekennzeichnet,**
**dass** das torsionsschwache erste Teil (10) ein langgestrecktes erstes Ende (13) und ein entgegengesetztes langgestrecktes zweites Ende (15) aufweist.

5. Papierbahnanordnung gemäß einem der Ansprüche 1, 2, 3 oder 4,
**dadurch gekennzeichnet,**
**dass** das Versteifungselement (30) eine Leiste mit entgegengesetztes Enden aufweist, einem ersten Ende (33) und einem zweiten Ende (34), die senkrecht zu der torsionsschwachen Achse (16) des ersten Teils (10) befestigt sind.

6. Papierbahnanordnung gemäß Anspruch 5,
**dadurch gekennzeichnet,**
**dass** das Versteifungselement (30) Schrauben (32) umfasst, wobei die Leiste durch Anschrauben des ersten Endes (33) des Versteifungselements (30) an das langgestreckte erste Ende (13) des torsionsschwachen ersten Teils (10) und durch Anschrauben des zweiten Endes (34) des Versteifungselements (30) an das langgestreckte zweite Ende (15) des torsionsschwachen ersten Teils (10) befestigt ist, und wobei das Versteifungselement (30) durch Anziehen der Schrauben (32) befestigt wird.

7. Papierbahnanordnung nach einem der vorhergehenden Ansprüche,
**dadurch gekennzeichnet,**
**dass** das torsionsschwache erste Teil (10) eine torsionsschwache Wendeanordnung ist.

8. Verfahren zum Zusammensetzen einer Papierbahnanordnung, welches die folgenden Verfahrensschritte umfasst:
schwenkbares Befestigen eines torsionsschwachen ersten Teils (10) mit einem Eingangsende (12) und einem entgegengesetzten Ausgangsende (14) und mit einem langgestreckten ersten Ende (13) und einem entgegengesetzten langgestreckten zweiten Ende (15) an einem daraufpassenden zweiten Teil (20) mit einem Befestigungspunkt (22) für das erste Teil, so dass das Eingangsende (12) an dem Befestigungspunkt (22) für das erste Teil schwenkbar befestigt ist, wobei das torsionsschwache erste Teil (10) torsionsschwach um die torsionsschwache Achse (16) des ersten Teils (10) ist, und wobei die torsionsschwache Achse (16) eine Achse von dem Eingangsende (12) zu dem Ausgangsende (14) bildet und mittig
zwischen dem langgestreckten ersten Ende (13) und dem langgestreckten zweiten Ende (15) des ersten Teils (10) angeordnet ist;
Schließen des torsionsschwachen ersten Teils (10) auf dem daraufpassenden zweiten Teil (20), so dass das torsionsschwache erste Teil (10) mit dem daraufpassenden zweiten Teil (20) zusammenpasst ist; und
Arretieren des torsionsschwachen ersten Teils (10) in der zusammenpassenden Torsionsposition anhand eines Versteifungselements (30), das an dem torsionsschwachen ersten Teil (10) befestigt ist, so dass, wenn das Versteifungselement (30) befestigt wird, das torsionsschwache erste Teil (10) torsionsfest um die torsionsschwache Achse (16) ist.
